# EUROPEAN PATENT SPECIFICATION

(11) **EP 2 682 410 B1**
(45) Date of publication and mention of the grant of the patent: **07.10.2015**
(21) Application number: 12752936.0
(22) Date of filing: 08.02.2012
(51) Int. Cl.: C08F 2/44, B05D 7/02, B32B 27/32

(54) **PROCESSES OF PRODUCING LAMINATE FILM AND RESIN COMPOSITION FOR COATING MEMBERS**
VERFAHREN ZUR HERSTELLUNG EINER VERBUNDFOLIE UND HARZZUSAMMENSETZUNG FÜR BESCHICHTUNGSELEMENTE
PROCÉDÉ DE FABRICATION D'UN FILM STRATIFIÉ ET COMPOSITION DE RÉSINE POUR LE REVÊTEMENT D'ÉLÉMENTS

(30) Priority: 02.03.2011 JP 2011045552; 14.04.2011 JP 2011090331
(43) Date of publication of application: 08.01.2014
(60) Divisional application: 15181294.8
(73) Proprietor: Adeka Corporation, Tokyo 116-0012 (JP)
(72) Inventor: KAWAMOTO Naoshi, Saitama-shi Saitama 336-0022 (JP); URUSHIHARA Tsuyoshi, Saitama-shi Saitama 336-0022 (JP); OKAMOTO Kohei, Saitama-shi Saitama 336-0022 (JP); SEGUCHI Tetsuya, Saitama-shi Saitama 336-0022 (JP)
(74) Representative: Jones, Helen M.M.
(86) International application number: PCT/JP2012/052887
(87) International publication number: WO 2012/117823

(56) References cited:
- EP-A1- 1 857 468
- EP-A1- 2 281 825
- WO-A1-2010/087064
- WO-A1-2010/087064
- JP-A- 2004 154 942
- JP-A- 2005 206 625
- JP-A- 2006 052 241
- JP-A- 2006 188 600
- JP-A- 2010 180 390

## Description

### TECHNICAL FIELD

The present invention relates to a method of producing a laminate film. More particularly, the present invention relates to a method of producing a laminate film which can yield a laminate film having excellent adhesion with a laminate base material and reduce the amount of an anchor coating agent or an adhesive for dry lamination to be used.

### BACKGROUND ART

As the use of a laminate film, packaging materials utilizing a film made of a thermoplastic resin have been conventionally proposed, and there are known laminate films in which an olefin resin film is laminated on a laminate base material of polyester, polyamide, metallic foil or the like by press-adhesion with heating (heat sealing) or application of an adhesive. Among olefin resins, in particular, polyethylene is widely used in the food packaging material applications since it is inexpensive and easily processable and exhibits excellent blocking of water vapor.

However, an olefin resin itself is inert and has poor adhesive force; therefore, for example, in Patent Document 1, a method of producing a laminate film by subjecting the surface of a laminate base material to an anchor coating treatment with an anchoring agent such as a polyurethane or an isocyanate compound and then laminating an ozone-treated olefin resin thereon is proposed.

There have been also proposed several methods of producing a laminate film without using an anchor coating agent and, for example, in Patent Document 2, a method of improving the adhesion of a film by subjecting the film to an ozone treatment under a specific condition is disclosed.

By the way, olefin resins have poor stability against heat and light and are thus easily oxidized/degraded when exposed to a high-temperature environment or a strong light, so that the service life required as a plastic product cannot be attained. In order to prevent such oxidation/degradation, a stabilizer such as a phenolic antioxidant, a phosphorus-based antioxidant, a sulfur-based antioxidant, a hydroxylamine compound, a hindered amine compound, an ultraviolet absorber or an acid scavenger is commonly added. In particular, a phenolic antioxidant is widely utilized because of its high thermostability effect in high-temperature processing.

Examples of a method of adding a stabilizer to an olefin resin include a method in which an olefin resin obtained by polymerization of an olefin monomer and is mixed with a stabilizer and the resulting mixture is melt-kneaded using a processing equipment such as an extruder to disperse the stabilizer in the olefin resin; and a method in which a stabilizer is added before or during polymerization of an olefin monomer. Such a method of blending an olefin resin and a stabilizer by melt-kneading has a problem in that the stabilizer must be added in an amount more than necessary in order to mitigate the defective dispersion of the stabilizer in the olefin resin.

As a method of adding a stabilizer before or during polymerization of an olefin monomer, for example, Patent Document 3 discloses a production method in which an α-olefin is polymerized in the presence of a phosphorus-based antioxidant. It is shown that a polymer obtained by polymerizing an α-olefin in the presence of a phosphorus-based antioxidant can attain superior stabilization effect as compared to a case where a phosphorus-based antioxidant is not used at the time of performing polymerization but is added to a polymer obtained by polymerization of an α-olefin.

Further, in Patent Document 4, it is shown that, by using a specific phosphorus-based antioxidant at the time of polymerizing an olefin, the polymerization is not inhibited and a polymer in which coloration caused by contact with water is suppressed can be obtained.

Meanwhile, in cases where a phenolic antioxidant-containing stabilizer is added before the polymerization of an olefin monomer, since phenol reduces the catalytic activity of an olefin polymerization catalyst, there are problems that the resulting olefin resin is colored and a desired polymerization cannot be achieved.

Further, while a phenolic antioxidant can provide high thermostability in high-temperature processing of an olefin resin, when a molded article of an olefin resin is immersed in water or a solvent such as alcohol, there are cases where the blended phenolic antioxidant elutes out of the molded article.

As a polymerization method in which a phenolic antioxidant is prevented from reducing the catalytic activity of a polymerization catalyst, for example, in Patent Documents 5 and 6, it is shown that inhibition of a polymerization catalyst can be suppressed by adding a phenolic antioxidant masked with an organoaluminum compound before or during polymerization of a monomer having an ethylenically unsaturated bond.

Moreover, an olefin resin obtained by polymerization of a monomer having an ethylenically unsaturated bond is inexpensive, has a low specific gravity and a high rigidity, exhibits good moldability and thus can be molded into a large molded article; therefore, such an olefin resin has been increasingly utilized in a variety of applications. In automobile applications, the use of such an olefin resin has been expanding to structural members and the like, examples of which include exterior parts such as bumpers; interior parts such as instrument panels and trims; engine room interior components such as fan casings; and a variety of module materials.

In general, such resin compositions used in automobile interior and exterior parts such as bumpers are produced by blending, as required, for example, an olefin resin, an elastomer, an inorganic filler, a pigment such as carbon black, a light stabilizer, an ultraviolet absorber, a hindered phenol-based antioxidant, a phosphorus-based antioxidant, a sulfur-based antioxidant and a lactone-based antioxidant.

Conventionally, bumpers are generally provided as unpainted or completely painted products; however, in recent years, in accordance with design requirements, bumpers have been widely provided in a partially unpainted condition. Therefore, it is demanded not only that a resin composition for a bumper have good weathering resistance and good adhesion with a coating film, but also that the bumper and its coating film be not discolored even when exposed to heat, sunlight and the like.

In general, in order to improve the weathering resistance and photostability of a molded article of an olefin resin, a variety of additives such as an antioxidant, a hindered amine-based light stabilizer and an ultraviolet absorber are blended; however, there is a problem in that such additives blended in an olefin resin are strongly affected by heat and sunlight and diffuse, migrate or bleed out from the resin to a coating film, thereby causing yellowing of the coating film. In particular, it is known that a phenolic antioxidant is converted into quinoline after bleeding out and causes yellowing of a coating film.

In order to inhibit the above-described yellowing of a coating film, for example, a method of preventing diffusion, migration and bleeding-out of additives by overcoating the coating film with an acryl-melamine system, a two-component urethane system, a polyester-melamine system, a polyester-urethane system or the like can be employed; however, even after the overcoating, a coating color of a high brightness (L value of 60 or higher) may cause yellowing of the coating film under natural environment. Further, by this method, a partially unpainted bumper cannot be obtained.

Meanwhile, Patent Documents 7 and 8 propose methods of inhibiting yellowing of a painted bumper with specific amounts and types of an antioxidant and a light stabilizer.

In addition, Patent Document 9 proposes a method in which specific four types of antioxidants and, as required, a benzoate-based light stabilizer and a hindered amine-based light stabilizer are blended into a polypropylene resin composition which contains a specific propylene-ethylene block copolymer, elastomer and inorganic filler.

Patent Documents 6, 10 and 11 describe methods in which a phenolic antioxidant masked with an organoaluminum compound is added before or during polymerization of a monomer having an ethylenically unsaturated bond.

### RELATED ART DOCUMENTS

### PATENT DOCUMENTS

Patent Document 1: Japanese Unexamined Patent Application Publication No. S61-283533
Patent Document 2: Japanese Unexamined Patent Application Publication No. S63-49423
Patent Document 3: Japanese Unexamined Patent Application Publication No. S63-92613
Patent Document 4: Japanese Unexamined Patent Application Publication No. H8-208731
Patent Document 5: Japanese Unexamined Patent Application Publication No. 2006-52241
Patent Document 6: Japanese Unexamined Patent Application Publication No. 2006-282985
Patent Document 7: Japanese Unexamined Patent Application Publication No. H6-107897
Patent Document 8: Japanese Unexamined Patent Application Publication No. H7-179719
Patent Document 9: Japanese Unexamined Patent Application Publication No. 2003-29270
Patent Document 10: Japanese Unexamined Patent Application Publication No. 2005-206625
Patent Document 11: Japanese Unexamined Patent Application Publication No. 2005-255953

Document JP2010180390 relates to the preparation of laminated films from a polymer composition to which 0.05 to 8 wt.% of an is added after polymerisation, at the time of granulation.

### SUMMARY OF THE INVENTION

### PROBLEMS TO BE SOLVED BY THE INVENTION

However, some of the anchor coating agents used in an anchor coating treatment contain, as a diluent, an organic solvent such as ethyl acetate, toluene or methyl ethyl ketone and such anchor coating agents have problems relating to deterioration of work environment due to vaporization of the solvent and disaster prevention, as well as a problem that, if the adhesive is not sufficiently dried, the organic solvent remains in the laminate film and gives odor to its contents.

In addition, in cases where, as a content, a liquid containing a component such as water, edible oil or alcohol is filled and packaged by a laminate film, there has been indicated a problem that elution or the like of an anchor coating agent component caused by the permeability of the liquid reduces the interlayer adhesion strength of the laminate film and detachment thus occurs between the film layers.

Furthermore, the method according to Patent Document 2 has a problem that, due to the high melt-extrusion temperature, the resin and the blended additives are degraded to cause odor in the contents.

Meanwhile, in Patent Documents 5 and 6, the application of the methods to a laminate film is not examined and neither the adhesive property of a laminate film nor the elution of the additives after film formation is examined at all.

In view of the above, an object of the present invention is to provide a method of producing a laminate film by which a laminate film having excellent adhesion with a laminate base material, in which laminate film the amount of elution of an additive into a solvent is small, can be produced.

### MEANS FOR SOLVING THE PROBLEMS

In view of the above-described current circumstances, the present inventors intensively studied to discover that the above-described problems can be solved by using a polyolefin stabilized by an addition of a specific phenolic antioxidant before or during polymerization of an ethylenically unsaturated monomer, thereby completing the present invention.

In addition, the present inventors also discovered that the above-described problems can be solved by adding a specific stabilizer before or during polymerization of a monomer having an ethylenically unsaturated bond, thereby completing the present invention.

Due to the recent advancements in the polymerization technologies, it is now possible to obtain a stabilized polymer by performing polymerization with an addition of a stabilizer composition to a polymerization catalyst, a polymerization apparatus or a piping thereof. This method can omit the step of blending a stabilizer composition by post-polymerization melt-kneading and allows the stabilizer to be uniformly dispersed in the resulting polymer; therefore, the amount of the stabilizer to be blended can be consequently reduced. However, since a phenol compound adversely affects the polymerization catalyst to impair the polymerization, a stabilizer composition containing a phenolic antioxidant could not be added in the polymerization step.

The present inventors have proposed methods in which, by using a phenolic antioxidant masked with an organoaluminum compound, even when the phenolic antioxidant is added before or during polymerization of a monomer having an ethylenically unsaturated bond, the resulting polymer is stabilized without impairing the activity of a polymerization catalyst even when the phenolic antioxidant is added before or during the polymerization (Patent Documents 6, 10 and 11).

When the present inventors, based on these findings, added a specific phenolic antioxidant masked with an organoaluminum compound before or during polymerization of a monomer having an ethylenically unsaturated bond, it was revealed that the resulting resin composition had good adhesion with a coating film and good heat-yellowing resistance.

That is, the method of producing a laminate film according to the present invention is characterized by comprising the step of adding, before or during polymerization of a monomer having an ethylenically unsaturated bond, a phenolic antioxidant represented by the following Formula (1), which is masked with an organoaluminum compound, to at least one of a catalyst system, a polymerization system and a piping, such that the phenolic antioxidant is incorporated in an amount of 0.001 to 0.5 parts by mass with respect to 100 parts by mass of a polymer obtained by the polymerization: 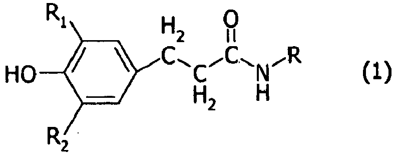 (wherein, R₁ and R₂ each independently represent a hydrogen atom, an alkyl group having 1 to 5 carbon atoms which is optionally branched or an arylalkyl group having 7 to 9 carbon atoms; and R represents an alkyl group having 1 to 30 carbon atoms which is optionally branched, an alkenyl group having 2 to 30 carbon atoms which is optionally branched, a cycloalkyl group having 3 to 12 carbon atoms which is optionally substituted or an aryl group having 6 to 18 carbon atoms which is optionally substituted).

Further, it is preferred that the method of producing a laminate film according to the present invention further comprise the step of adding, before or during the polymerization of a monomer having an ethylenically unsaturated bond, a phosphorus-based antioxidant to at least one of the catalyst system, the polymerization system and the piping in an amount of 0.001 to 3 parts by mass with respect to 100 parts by mass of the polymer obtained by the polymerization.

Still further, in the method of producing a laminate film according to the present invention, it is preferred that the above-described organoaluminum compound be a trialkylaluminum.

The laminate film according to the present invention is characterized by being produced by the method of producing a laminate film.

### EFFECTS OF THE INVENTION

By the present invention, a method of producing a laminate film, by which a laminate film having excellent adhesion with a laminate base material can be obtained, in which laminate film the amount of elution of an additive into a solvent is small and the amount of an anchoring agent used is reduced, which laminate film can also be utilized in food articles and sanitary goods such as medical supplies, can be provided.

### MODE FOR CARRYING OUT THE INVENTION

The phenolic antioxidant used in the method of producing a laminate film according to the present invention is a compound represented by the following Formula (1): 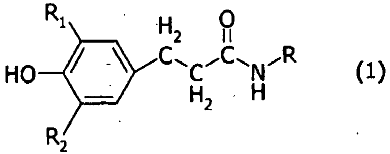 (wherein, R₁ and R₂ each independently represent a hydrogen atom, an alkyl group having 1 to 5 carbon atoms which is optionally branched or an arylalkyl group having 7 to 9 carbon atoms; and R represents an alkyl group having 1 to 30 carbon atoms which is optionally branched, an alkenyl group having 2 to 30 carbon atoms which is optionally branched, a cycloalkyl group having 3 to 12 carbon atoms which is optionally substituted or an aryl group having 6 to 18 carbon atoms which is optionally substituted).

Examples of the alkyl group having 1 to 5 carbon atoms which is optionally branched and represented by R₁ and R₂ in the above-described Formula (1) include methyl group, ethyl group, propyl group, isopropyl group, butyl group, sec-butyl group, tert-butyl group, pentyl group, sec-pentyl group and tert-pentyl group; however, the alkyl group is particularly preferably a tert-butyl group since it has good effect of stabilizing the phenolic antioxidant.

Examples of the arylalkyl group having 7 to 9 carbon atoms which is represented by R₁ and R₂ in the above-described Formula (1) include benzyl and 1-methyl-1-phenylethyl.

Examples of the alkyl group having 1 to 30 carbon atoms which is optionally branched and represented by R in the above-described Formula (1) include methyl group, ethyl group, propyl group, isopropyl group, butyl group, sec-butyl group, t-butyl group, isobutyl group, pentyl group, isopentyl group, t-pentyl group, hexyl group, heptyl group, n-octyl group, isooctyl group, t-octyl group, nonyl group, isononyl group, decyl group, undecyl group, dodecyl group, tridecyl group, tetradecyl group, pentadecyl group, hexadecyl group, heptadecyl group and octadecyl group; however, in the present invention, an alkyl group having 12 to 24 carbon atoms is particularly preferred. When the alkyl group has less than 12 carbon atoms, the phenolic antioxidant may be easily vaporized, while when the alkyl group has more than 24 carbon atoms, the ratio of phenol relative to the molecular weight of the phenolic antioxidant is decreased, so that the stabilizing effect may be reduced.

These alkyl groups are also optionally interrupted by an oxygen atom, a sulfur atom or the below-described aryl group, and the hydrogen atoms of the alkyl groups are also optionally substituted with a hydroxy group, a cyano group, an alkenyl group, a chain aliphatic group such as an alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or a cyclic aliphatic group such as a cycloalkyl group. In addition, these interruptions or substitutions may also exist in combination.

The alkenyl group having 2 to 30 carbon atoms which is optionally branched and may be represented by the above-described R is the above-described alkyl group into which a carbon-carbon double bond is introduced. In the same manner as in the case of the above-described alkyl group, an alkenyl group having 12 to 24 carbon atoms is particularly preferred.

Examples of the cycloalkyl group having 3 to 12 carbon atoms which is optionally substituted and represented by R in the above-described Formula (1) include cyclopropyl group, cyclopentyl group, cyclohexyl group, cycloheptyl group, cyclooctyl group, cyclononyl group and cyclodecyl group. The hydrogen atoms of the cycloalkyl group are optionally substituted with an alkyl group, an alkenyl group, an alkenyloxy group, a hydroxy group or a cyano group, and the alkyl group is also optionally interrupted by an oxygen atom or a sulfur atom.

Examples of the aryl group having 6 to 18 carbon atoms which is optionally substituted and represented by R in the above-described Formula (1) include phenyl group, methylphenyl group, butylphenyl group, octylphenyl group, 4-hydroxyphenyl group, 3,4,5-trimethoxyphenyl group, 4-t-butylphenyl group, biphenyl group, naphthyl group, methylnaphthyl group, anthracenyl group, phenanthryl group, benzyl group, phenylethyl group and 1-phenyl-1-methylethyl group. Further, the hydrogen atoms of the aryl group are optionally substituted with an alkyl group, an alkenyl group, an alkenyloxy group, a hydroxy group or a cyano group, and the alkyl group is also optionally interrupted by an oxygen atom or a sulfur atom.

Specific examples of the structure of the phenolic antioxidant represented by the above-described Formula (1) include the following compounds No. 1 to No. 16. However, the present invention is not restricted to the following compounds by any means.

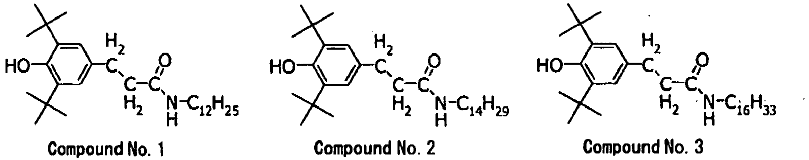

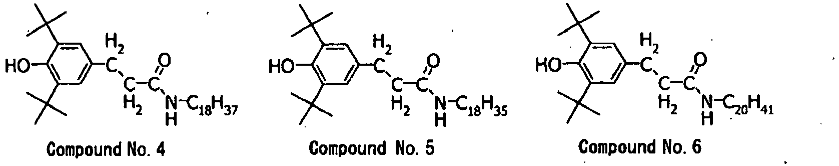

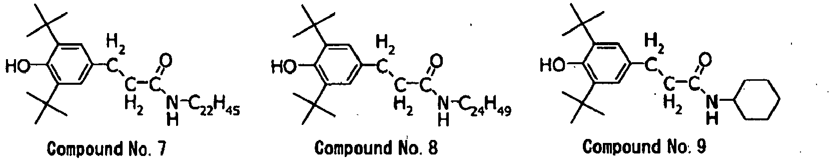

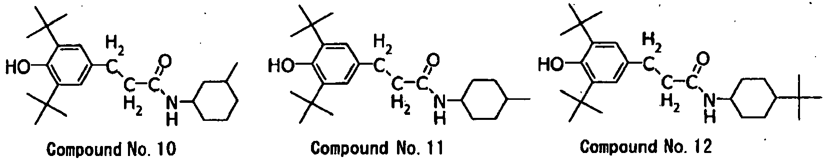

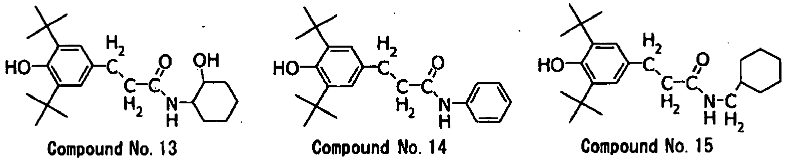

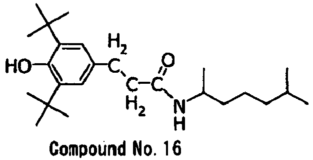

In cases where the phenolic antioxidant represented by the above-described Formula (1) which is masked with an organoaluminum compound is added, the phenolic antioxidant is added in an amount of 0.001 to 0.5 parts by mass, preferably 0.001 to 0.3 parts by mass, with respect to 100 parts by mass of the polymer obtained by the polymerization. When the amount of the phenolic antioxidant is less than 0.001 parts by mass, the effect of the addition may not be attained. Meanwhile, the phenolic antioxidant can be added in an amount of greater than 0.5 parts by mass; however, such an amount is economically disadvantageous because it causes the resulting polymer to be colored and the effect of the addition is limited.

As for a method of adding the phenolic antioxidant represented by the above-described Formula (1) which is masked with an organoaluminum compound, there is no particular restriction. Examples of suitable mode thereof include one in which the masked phenolic antioxidant is added and mixed in at least one of a catalyst feed tank, a polymerization apparatus and a piping of the production line.

The above-described masking can be performed by mixing and stirring an organoaluminum compound and the phenolic antioxidant in an inert solvent. By the mixing and stirring, the hydrogen of the phenolic hydroxyl group of the phenolic antioxidant is substituted with the organoaluminum compound. The above-described phenolic antioxidant and organoaluminum compound may be mixed with stirring prior to being added to at least one of the catalyst system, the polymerization system and the piping. Alternatively, the phenolic antioxidant and the organoaluminum compound may be added and mixed separately in at least one of the catalyst system, the polymerization system and the piping.

In cases where a compound produced as a by-product in the masking reaction of the phenolic antioxidant does not affect the polymerization reaction of the monomer or the resulting polymer, the masked phenolic antioxidant may be used as is; however, in cases where the by-produced compound inhibits the polymerization, it is preferred to remove the compound by vacuum distillation before adding the masked phenolic antioxidant to at least one of the catalyst system, the polymerization system and the piping.

It is desired that the above-described masked phenolic antioxidant be capable of regenerating phenol by undergoing a reaction with a hydrogen-donating compound such as water, an alcohol or an acid, which is added as a deactivation treatment of the polymerization catalyst after the polymerization.

Examples of the above-described organoaluminum compound include alkylaluminums and alkylaluminum hydrides, and the organoaluminum compound is preferably an alkylaluminum, particularly preferably a trialkylaluminum. Examples of the trialkylaluminum include trimethylaluminum, triethylaluminum, tri-n-propylaluminum, triisobutylaluminum, tri-n-hexylaluminum and tri-n-octylaluminum, and these compounds may be used individually or in combination as a mixture. In addition, an aluminoxane obtained by a reaction between an alkylaluminum or an alkylaluminum hydride and water can also be used in the same manner.

It is desired that the mixing ratio of the organoaluminum compound and the phenolic antioxidant represented by the above-described Formula (1) (the organoaluminum compound/the phenolic antioxidant represented by the above-described Formula (1)) be, in terms of mass ratio, 1/5 to 100/1. When the ratio of the organoaluminum compound is lower than 1/5, the excessive amount of the phenolic antioxidant may adversely affect the catalyst activity, while when the ratio is higher than 100/1, an aluminum compound remains in the resulting polymer after the polymerization and this may cause deterioration in the physical properties of the polymer or affect the component ratio of the catalyst metal, making it unable to perform the desired polymerization.

Examples of the above-described inert solvent include aliphatic and aromatic hydrocarbon compounds. Examples of the aliphatic hydrocarbon compounds include saturated hydrocarbon compounds such as n-pentane, n-hexane, n-heptane, n-octane, isooctane and refined kerosene; and cyclic saturated hydrocarbon compounds such as cyclopentane, cyclohexane and cycloheptane. Examples of the aromatic hydrocarbon compounds include benzene, toluene, ethylbenzene, xylene and gasoline fractions. Among these compounds, n-hexane, n-heptane or a gasoline fraction is preferably used. The concentration of the trialkylaluminum salt in the inert solvent is preferably 0.001 to 0.5 mol/L, particularly preferably 0.01 to 0.1 mol/L.

It is preferred that the production method according to the present invention further comprise the step of adding, before or during the polymerization of the monomer having an ethylenically unsaturated bond, a phosphorus-based antioxidant to at least one of the catalyst system, the polymerization system and the piping in an amount of 0.001 to 3 parts by mass with respect to 100 parts by mass of the polymer obtained by the polymerization.

Examples of the phosphorus-based antioxidant used in the present invention include known phosphorus-based antioxidants such as triphenyl phosphite, trisnonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-t-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, 2-ethyl-2-butylpropylene glycol and 2,4,6-tri-tert-butylphenol. Thereamong, a phosphorus-based antioxidant which does not adversely affect the polymerization even when it is added before the polymerization of propylene monomer, such as tris(2,4-di-tert-butylphenyl)phosphite, is preferred.

In cases where the above-described phosphorus-based antioxidant is used, the phosphorus-based antioxidant is added in an amount of 0.001 to 3 parts by mass, preferably 0.005 to 0.5 parts by mass, with respect to 100 parts by mass of the polymer obtained by the polymerization of a monomer having an ethylenically unsaturated bond. When the amount is less than 0.001. parts by mass, the effect of the addition may not be attained. Meanwhile, the phosphorus-based antioxidant can be added in an amount of 3 parts by mass or greater; however, such an amount is economically disadvantageous because the effect of the addition is small.

As a method of adding the phosphorus-based antioxidant, the phosphorus-based antioxidant is preferably mixed with the above-described inert solvent before being added, and the phosphorus-based antioxidant may also be mixed in advance with the inert solvent along with the phenolic antioxidant represented by ahe avove-described Formula (1). Alternatively, the phosphorus-based antioxidant may be mixed with the inert solvent and added to the polymerization system, the catalyst system or the piping, separately from the phenolic antioxidant represented by the Formula (1).

The phenolic antioxidant represented by the above-described Formula (1) which is masked with an organoaluminum compound and the above-described phosphorus-based antioxidant are added in a total amount of preferably 0.001 to 3 parts by mass, more preferably 0.001 to 0.5 parts by mass, with respect to 100 parts by mass of the polymer obtained in the polymerization step.

Examples of the above-described monomer having an ethylenically unsaturated bond include ethylene, propylene, 1-butene, 1-hexene, 3-methyl-1-butene, 3-methyl-1-pentene, 4-methyl-1-pentene, vinylcycloalkane, styrene and derivatives of these monomers.

The monomer used in the present invention which has an ethylenically unsaturated bond may either be a single type of monomer or a combination of two or more types of monomers, and it is preferably ethylene or a combination of α-olefin monomers. The monomer may also be, for example, ethylene by itself, a combination of ethylene and propylene, a combination of ethylene, propylene and butene, or a combination of an α-olefin monomer and a non-conjugated diene monomer.

As a method of performing the polymerization reaction of the monomer having an ethylenically unsaturated bond, any conventionally used method can be employed. For example, a method of performing polymerization in a liquid phase in the presence of an inert solvent such as an aliphatic hydrocarbon (e.g., butane, pentane, hexane, heptane or isooctane), an alicyclic hydrocarbon (e.g., cyclopentane, cyclohexane or methylcyclohexane), an aromatic hydrocarbon (e.g., toluene, xylene or ethylbenzene), a gasoline fraction or a hydrogenated diesel fraction; a polymerization method in which a liquefied monomer itself is used as a medium; a method of performing polymerization in a gas phase where substantially no liquid phase is present, such as an inert gas atmosphere of nitrogen; or a combination of two or more of these polymerization methods can also be employed. Further, the polymerization may be performed by either a batchwise process or a continuous process, and it may also be performed by a single-step polymerization method or a multi-step polymerization method.

Moreover, an active hydrogen compound, a particulate carrier, an organoaluminum compound, an ion-exchanging layered compound, an inorganic silicate or a catalyst component other than the above-described polymerization catalyst, such as a carrier, may also be incorporated in such an amount which does not inhibit the polymerization.

As a polymerization vessel to be used in the above-described polymerization reaction, a continuous reaction vessel installed in an existing polymerization equipment can be used as is. In the present invention, there is no particular restriction on the size, shape, material and the like of the existing polymerization equipment.

The above-described polymerization catalyst is not particularly restricted and any known polymerization catalyst can be employed. Examples thereof include compounds of transition metals belonging to one of the groups 3 to 11 of the periodic table (such as titanium, zirconium, hafnium, vanadium, iron, nickel, lead, platinum, yttrium and samarium). Representative examples of the polymerization catalyst include Ziegler catalysts; Ziegler-Natta catalysts composed of a titanium-containing solid transition metal component and an organic metal component; Brookhart catalysts, which are compounds in which a hetero atom of nitrogen, oxygen, sulfur, phosphorus is bound to a transition metal belonging to one of the groups 4 to 10 of the periodic table; and metallocene catalysts composed of a transition metal compound belonging to one of the groups 4 to 6 of the periodic table, which has at least one cyclopentadienyl skeleton, and a co-catalyst component. However, an electron-donating compound is preferably employed since a high-quality polymer can be obtained.

Examples of the above-described Ziegler catalysts include those catalysts that are produced by subjecting a titanium trichloide or titanium trichloride composition, which is obtained by reduction of titanium tetrachloride with organoaluminum or the like, to a treatment with an electron-donating compound and then activating the resultant (see, for example, Japanese Unexamined Patent Application Publication Nos. S47-34478, S58-23806 and S63-146906); catalysts composed of a titanium trichloride composition, which is obtained by reducing titanium tetrachloride with an organoaluminum compound and then treating the resultant with a variety of electron donors and electron acceptors, an organoaluminum compound and an aromatic carboxylic acid ester (see, for example, Japanese Unexamined Patent Application Publication Nos. S56-100806, S56-120712 and S58-104907); and supported-type catalysts composed of titanium tetrachloride and a variety of electron donors that are supported on magnesium halide (see, for example, Japanese Unexamined Patent Application Publication Nos. S57-63310, S58-157808, S58-83006, S58-5310, S61-218606, S63-43915 and S63-83116).

Examples of the above-describe metallocene catalysts include the transition metal metallocene catalyst described in Japanese Unexamined Patent Application Publication No. H9-12621; and those transition metal metallocene catalysts primarily used in polymerization of polypropylene, which are described in Japanese Unexamined Patent Application Publication Nos. H5-043616, H5-295022, H5-301917, H6-239914, H6-239915, H6-239917, H7-082311, H7-228621, H7-330820, H8-059724, H8-085707, H8-085708, H8-127613, H10-226712, H10-259143, H10-265490, H11-246582, H11-279189, H11-349633, 2000-229990, 2001-206914, 2002-37795, 2002-194015 and 2002-194016, Japanese Translated PCT Patent Application Laid-open No. 2002-535339, WO 99/37654, WO 99/45014 and WO 00/8036.

Examples of the above-described electron-donating compounds include ether-based compounds, ester-based compounds, ketone-based compounds and alkoxysilane-based compounds. These electron-donating compounds may be added individually, or a plurality thereof may be added as required.

Examples of the above-described ether-based compounds include diethyl ether, dipropyl ether, diisopropyl ether, di-n-butyl ether, diethylene glycol dimethyl ether, propylene glycol dimethyl ether, ethylene oxide, tetrahydrofuran, 2,2,5,5-tetramethyl tetrahydrofuran and dioxane.

Examples of the above-described ester-based compounds include methyl acetate, ethyl acetate, n-propyl acetate, isopropyl acetate, methyl propionate, ethyl propionate, n-propyl propionate, methyl methacrylate, ethyl methacrylate, n-propyl methacrylate, ethyl phenylacetate, methyl benzoate, ethyl benzoate, phenyl benzoate, methyl toluate, ethyl toluate, methyl anisate, ethyl anisate, methyl methoxybenzoate, ethyl methoxybenzoate, methyl methacrylate, ethyl methacrylate, dimethyl phthalate, diethyl phthalate, dipropyl phthalate, dibutyl phthalate, diisobutyl phthalate, dihexyl phthalate, γ-butyrolactone and ethyl cellosolve.

Examples of the above-described ketone-based compounds include acetone, diethyl ketone, methylethyl ketone and acetophenone.

Examples of the above-described alkoxysilane-based compounds include tetramethoxysilane, ethyltrimethoxysilane, propyltrimethoxysilane, isopropyltrimethoxysilane, t-butyltrimethoxysilane, i-butyltrimethoxysitane, phenyltrimethoxysilane, cyclohexyltrimethoxysilane, diethyldimethoxysilane, dipropyldimethoxysilane, diisopropyldimethoxysilane, diphenyldimethoxysilane, t-butylmethyldimethoxysilane, t-butylethyldimethoxysilane, t-butyl-n-propyldimethoxysilane, t-butylisopropyldimethoxysilane, cyclohexylmethyldimethoxysilane, tetraethoxysilane, ethyltriethoxysilane, propyltriethoxysilane, isopropyltriethoxysilane, t-butyltriethoxysilane, phenyltriethoxysilane, cyclohexyltriethoxysilane, diethyldiethoxysilane, dipropyldiethoxysilane, diisopropyldiethoxysilane, diphenyldiethoxysilane, t-butylmethyldiethoxysilane, cyclohexylmethyldiethoxysilane and dicyclopentyldimethoxysilane.

The type of the above-described carrier is not restricted and examples thereof include inorganic carriers such as inorganic oxides and organic carriers such as porous polyolefins. A plurality of these carriers may also be used in combination.

Examples of the above-described inorganic carriers include silica, alumina, magnesium oxide, zirconium oxide, titanium oxide, iron oxide, calcium oxide and zinc oxide. In addition, examples of other inorganic carriers include magnesium halides such as magnesium chloride and magnesium bromide; magnesium alkoxides such as magnesium ethoxide; and ion-exchanging layered compounds.

The above-described "ion-exchanging layered compounds" refer to those compounds having a crystalline structure in which the surfaces constituted by ionic bonds and the like are laminated in parallel with each other through week bonding force and contain exchangeable ions. Specific examples of such ion-exchanging layered compound include kaolin, bentonite, talc, kaolinite, vermiculite, montmorillonite, mica, α-Zr(HAsO₄)₂·H₂O, α-Zr(HPO₄)₂·H₂O, α-Sn(HPO₄)₂·H₂O and γ-Ti(NH₄PO₄)₂·H₂O.

Examples of the above-described organic carriers include polyesters such as polyethylenes, polypropylenes, polystyrenes, ethylene-butene copolymers, ethylenepropylene copolymers, polymethacrylates, polyacrylates, polyacrylonitriles, polyamides, polycarbonates and polyethylene terephthalates; and polyvinyl chlorides. These organic carriers may also be cross-linked as in the case of, for example, a styrene-divinylbenzene copolymer. Further, catalysts chemically bound to these organic carriers can be used as well.

These carriers have a particle size (volume average) in the range of usually 0.1 to 300 µm, preferably 1 to 200 µm, more preferably 10 to 100 µm. When the particle size is smaller than 1 µm, the resulting polymer is likely to be in the form of fine powder, while when the particle size is excessively large, coarse particles are generated. Therefore, the particle size of the carrier should be selected in accordance with the desired particle shape.

The above-described carrier usually has a pore volume of 0.1 to 5 cm²/g, preferably 0.3 to 3 cm²/g. The pore volume can be measured by, for example, a BET method or mercury porosimetry.

Examples of the above-described organoaluminum compound include the same ones as those exemplified for the organoaluminum compound used in the masking of the above-described phenolic antioxidant represented by the Formula (1).

In the above-described polymer, as required, other additive(s) that are normally used in a polymer obtained from a monomer having an ethylenically unsaturated bond may also be blended. As a method of blending such other additives, the additives may be added before or at the time of polymerizing the monomer having an ethylenically unsaturated bond, as long as the additives do not inhibit the polymerization. Alternatively, other additives may be mixed with the above-described polymer in an amount appropriate for the intended purpose and the resulting mixture can then be granulated and molded by melt-kneading using a molding apparatus such as an extruder.

Examples of such other additives include phenolic antioxidants, phosphorus-based antioxidants, thioester-based antioxidants, ultraviolet absorbers, hindered amine compounds, heavy metal inactivators, nucleating agents, flame retardants, metallic soaps, hydrotalcites, fillers, lubricants, antistatic agents, pigments, dyes and plasticizers.

The above-described phenolic antioxidant is different from the one represented by the above-described Formula (1). Examples of such phenolic antioxidant include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis-(6-t-butyl-4-methylphenol), 2,2'-thiodiethylenebis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), iso-octyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamide-bis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylenebis(4,6-di-t-butylphenol), 3,5-bis(1,1-dimethylethyl)-4-hydroxy-benzenepropanoate, C13-15 alkyl esters, 2,5-di-t-amylhydroquinone, hindered phenol polymer (AO.OH998, manufactured by ADEKA Palmarole), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,10-tetra-t-butylbenzo[d,f][1,3,2]-dioxaphosphepin, hexamethylenebis[3-(3,5-di-t-butyl-4-hydroxyphenyl)propionate, calcium bis[monoethyl(3,5-di-t-butyl-4-hydroxybenzyl)phosphonate, a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-t-butyl-phenyl)butyric acid]glycol ester, 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphonate, tridecyl-3,5-di-t-butyl-4-hydroxybenzyl thioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid]glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-dit-butyl-4-hydroxyphenyl)propionyloxyethyl]isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8,10-tetraoxaspiro[5.5]undecane and triethylene glycol-bis[β-(3-t-butyl-4-hydroxy-5-methylphenyl)propionate]. In particular, for example, tetrakis[methylene-3-(3',5'-di-t-butyl-4'-hydroxyphenyl)propionate]methane is preferably used.

The phenolic antioxidant used as the above-described other additive is added in an amount of 0.001 to 5 parts by mass, more preferably 0.001 to 0.5 parts by mass, with respect to 100 parts by mass of the above-described polymer.

Examples of the phosphorus-based antioxidant used as the above-described other additive include the same ones as those compounds exemplified in the above as the phosphorus-based antioxidant to be added. The above-described phosphorus-based antioxidant is used in an amount of preferably 0.001 to 0.5 parts by mass with respect to 100 parts by mass of the above-described polymer.

Examples of the above-described thioester-based antioxidant include tetrakis[methylene-3-(laurylthio)propionate]methane, bis(methyl-4-[3-n-alkyl(C12/C14)thiopropionyloxy]5-t-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol) and distearyl-disulfide.

The thioester-based antioxidant is used in an amount of preferably 0.001 to 0.3 parts by mass, more preferably 0.01 to 0.3 parts by mass, with respect to 100 parts by mass of the above-described polymer.

Examples of the above-described ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-acryloyloxyethyl)-5-tert-octhylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazoie, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to C13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenylsalicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and a variety of metal salts and metal chelates, in particular, salts and chelates of nickel and chromium.

The above-described ultraviolet absorber is used in an amount of 0.001 to 5 parts by mass, more preferably 0.005 to 0.5 parts by mass, with respect to 100 parts by mass of the above-described polymer.

Examples of the above-described hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis{4-(1-octyloxy-2,2,6,6-tetramethyl)piperidyl}decanedionate, bis{4-(2,2,6,6-tetramethyl-1-undecyloxy)piperidyl}carbonate and TINUVIN NOR 371 manufactured by Ciba Specialty Chemicals K.K.

The above-described hindered amine-based light stabilizer is used in an amount of preferably 0.001 to 5 parts by mass, more preferably 0.005 to 0.5 parts by mass, with respect to 100 parts by mass of the above-described polymer.

Examples of the above-described heavy metal inactivator include salicylamide-1,2,4-triazol-3-yl, bis-salicylic acid hydrazide, dodecanedioyl-bis(2-(2-hydroxybenzoyl)hydrazide) and bis(3-(3,5-di-t-butyl-4-hydroxyphenyl)propionic acid)hydrazide. The heavy metal inactivator is used in an amount of preferably 0.001 to 10 parts by mass, more preferably 0.05 to 5 parts by mass, with respect to 100 parts by mass of the above-described polymer.

Examples of the above-described nucleating agent include metal carboxylates such as sodium benzoate, aluminum 4-tert-butylbenzoate, sodium adipate and 2-sodium bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyhydric alcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxamide (RIKACLEAR PC1), N,N',N"-tricyclohexyl-1,3,5-benzene tricarboxamide, N,N'-dicyclohexyl-naphthalene dicarboxamide and 1,3,5-tri(dimethylisopropoylamino)benzene.

The above-described nucleating agent is used in an amount of 0.001 to 10 parts by mass, more preferably 0.005 to 5 parts by mass, with respect to 100 parts by mass of the above-described polymer.

Examples of the above-described flame retardant include aromatic phosphates such as triphenyl phosphate, tricresyl phosphate, trixylenyl phosphate, cresyldiphenyl phosphate, cresyl-2,6-xylenyl phosphate and resorcinol-bis(diphenylphosphate); phosphonates such as divinyl phenyl phosphonate, diallyl phenyl phosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melamine polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol A-type dimethacrylate, pentabromobenzyl acrylate and brominated styrene.

The above-described flame retardant is used in an amount of preferably 1 to 70 parts by mass, more preferably 10 to 30 parts by mass, with respect to 100 parts by mass of the above-described polymer.

Examples of the above-described filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite and fibrous magnesium oxysulfate. Thereamong, a filler having an average particle size (in the case of a spherical or flat filler) or an average fiber diameter (in the case of a needle-form or fibrous filler) of 5 µm or less is preferred. The amount of the above-described filler to be used can be set as appropriate in a range where the present invention is not adversely affected.

The above-described lubricant is added for the purpose of imparting the surface of the resulting molded article with lubricity and improving its damage-preventing effect. Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described lubricant is added in an amount of 0.03 to 2 parts by mass, more preferably 0.04 to 1 part by mass, with respect to 100 parts by mass of the above-described polymer. When the amount is less than 0.03 parts by mass, the desired lubricity may not be attained, while when the amount is greater than 2 parts by mass, the lubricant component may bleed out to the surface of the resulting molded article of the polymer and/or cause deterioration in the physical properties thereof.

The above-described antistatic agent is added for the purpose of reducing the electrostatic property of the resulting molded article and preventing adhesion of dusts caused by electrostatic charge. Examples of the antistatic agent include cationic, anionic and non-ionic antistatic agents. Preferred examples include polyoxyethylene alkylamines, polyoxyethylene alkyl amides, fatty acid esters thereof and glycerin fatty acid esters. These antistatic agents may be used individually, or two or more thereof may be used in combination. Further, the antistatic agent is added in an amount of preferably 0.03 to 2 parts by mass, more preferably 0.04 to 1 part by mass, with respect to 100 parts by mass of the above-described polymer. When the amount of the antistatic agent is excessively small, the antistatic effect becomes insufficient, while when the amount is excessively large, the antistatic agent may bleed out to the surface and/or cause deterioration in the physical properties of the polymer.

The method of producing a laminate film according to the present invention is characterized by comprising the step of adding, before or during polymerization of a monomer having an ethylenically unsaturated bond, a phenolic antioxidant represented by the above-described Formula (1), which is masked with an organoaluminum compound, to at least one of a catalyst system, a polymerization system and a piping, such that the phenolic antioxidant is incorporated in an amount of 0.001 to 0.5 parts by mass with respect to 100 parts by mass of a polymer obtained by the polymerization. By this constitution, sufficient stabilization effect can be attained with an addition of the phenolic antioxidant in a small amount and, as a result of the reduction in the added amount, it became possible to prevent the antioxidant from bleeding out and eliminate adhesion-inhibiting factors generated in an ozone treatment. A phenolic antioxidant other than the specific phenolic antioxidant according to the present invention exhibits poor stabilization effect when added at the time of polymerization; therefore, such a phenolic antioxidant is required to be added in a large amount. Consequently, the antioxidant bleeds out to inhibit the adhesion of a laminate film. The resulting polymer is molded into a laminate film by a method in which the above-described polymer is molded into films and a laminate film is produced by laminating the films with each other or by laminating the film(s) with a laminate base material. Further, as required, the above-described polymer may also be processed into a laminate film having three or more layers.

Examples of the above-described laminate base material include those that are normally used by being adhered with a film, such as polymers having a film-forming capability, papers, nonwoven fabrics, metal foils (e.g., aluminum foils), metal-deposited films (e.g., silicon oxide-deposited films and aluminum-deposited films) and cellophanes.

The thickness of the above-described laminate base material is not particularly restricted and can be selected as appropriate in accordance with the purpose thereof. The thickness of the above-described laminate base material may be generally 5 to 50 µm. Further, as required, the laminate base material may be subjected to a surface treatment such as an ozone treatment, a corona discharge treatment or a flame treatment.

Examples of the polymers having a film-forming capability that can be used as the above-described laminate base material include olefin-based copolymers such as high-density polyethylenes, medium/low-density polyethylenes, ethylene-vinyl acetate copolymers, ethylene-acrylate copolymers, ionomers, polypropylenes, poly-1-butene and poly-4-methyl1-pentene; vinyl-based polymers such as polyvinyl chlorides, polyvinylidene chlorides, polystyrenes, polyacrylates and polyacrylonitriles; polyamides such as nylons and polymetaxylylene adipamide; polyesters such as polyethylene terephthalates, polyethylene isophthalates, polybutylene terephthalates and polyethylene naphthalates; polyvinyl alcohols; ethylene-vinyl alcohol copolymers; and polycarbonates. Further, films obtained by molding these polymers may also be stretched uniaxially or biaxially.

Among those polymers that are produced by the production method according to the present invention, polyethylenes are preferred. In particular, a linear low-density polyethylene (LLDPE) is preferred since it has excellent heat-seal property and heat resistance and exhibits resistance to bending and rubbing when made into a packaging material.

The thickness of the laminate film produced by the production method according to the present invention is not particularly restricted and can be selected as appropriate in accordance with the purpose thereof. The thickness of the laminate film may be generally 10 to 200 µm.

As a method of laminating the above-described film and the laminate base material, for example, a dry lamination method, an extrusion lamination method, a hot-melt lamination method, a wet lamination method, a wax lamination method or a thermal lamination method can be employed.

The above-described dry lamination method is a method in which an adhesive diluted with an organic solvent to an appropriate viscosity is coated onto a film and this film is dried and then laminated with the other film by press-adhesion. As the adhesive, one composed of a base agent and a curing agent is commonly used. Examples of the base agent include ester compounds composed of isophthalic acid, adipic acid, sebacic acid or the like and ethylene glycol, neopentyl glycol, 1,6-hexane diol or the like; polyester-urethane diol resins composed of isophorone diisocyanate, xylylene diisocyanate, or hexamethylene diisocyanate; silane coupling agents; and epoxy-resin containing agents.

Examples of the curing agent include those that are composed of trimethylolpropane and isophorone diisocyanate, xylylene diisocyanate or hexamethylene diisocyanate. However, the base agent and the curing agent are not restricted to the ones exemplified in the above and they can be selected as appropriate in accordance with the intended purpose of providing heat resistance, or chemical resistance.

Examples of the above-described extrusion lamination method include a method of producing a poly-laminate by coating molten polyethylene onto one side of a film and a method of producing a poly-sandwich laminate by pouring molten polyethylene between two films. The molten polyethylene serves as an adhesive; however, polypropylene may be used in place of polyethylene. Further, in cases where an anchor coating agent is applied to the surface of a film, a paper and a thick film can also be easily laminated thereon.

Examples of the above-described anchor coating agent include adhesives for epoxy resins, such as carboxylic acid anhydride-modified polyolefins, isocyanate-based resins, organic titanate-based resins and polyethylene imine-based resins and polybutadiene-based resins; however, an isocyanate-based resin having excellent water resistance, moisture resistance and boiling resistance is preferably employed.

The above-described hot-melt lamination method is a method in which an adhesive or the like, which is adjusted by heating to have an appropriate viscosity, is coated onto a film and this film press-adhered. This method is advantageous in that it includes no drying step and the resulting laminate can be used immediately after being cooled; however, the method has drawbacks in that, for example, the resulting laminate is poor in heat resistance and strength.

The above-described wet lamination method is a method of laminating using a water-soluble or emulsion-type adhesive. Examples of the water-soluble or emulsion-type adhesive include water-soluble vinylons and vinyl acetate-based emulsions.

The above-described thermal lamination method is a method capable of adhering the film only by press-adhesion with application of heat thereto. This method is advantageous in that it does not require an adhesive, a solvent and the like to be used; however, since the resulting laminate has poor heat resistance as a packaging material, the use thereof is limited.

The use of the laminate film obtained by the production method of the present invention is not particularly restricted and the laminate film can be generally utilized in those applications where a laminate film is conventionally used.

Examples thereof include the uses as food packaging materials in the form of a laminate film having an olefin film highly resistant to water as an outer layer or a laminate obtained by laminating a low-density polyethylene, a medium-density polyethylene, or an ethylene-vinyl acetate copolymer. Further, in cases where the laminate film is utilized as a boil-in-bag pouch or a retort pouch packaging material, for example, an oxygen impermeable film such as an aluminum foil is laminated as an inner layer.

### EXAMPLES

The present invention will now be described in more detail by way of examples and comparative examples thereof; however, the present invention is not restricted thereto by any means. The evaluations in the examples and comparative examples were performed by the following methods.

### (Adhesion)

After producing a laminate film, the presence or absence of detachment of the film was verified. Specifically, when both ends of the laminate film was rubbed, a condition where the laminate film easily slipped out of place was evaluated as "could not be adhered" and a condition where the laminate film stayed in place was evaluated as "good".

### (Adhesion Strength)

From a laminate film obtained by the below-described procedures, a test piece of 15 mm in width and 100 mm in length was prepared. After manually abrasing the thus obtained test piece over a length of 50 mm in the longitudinal direction, both ends of the resulting test piece was pinched and detached in the 180-degree direction using a tensile tester (STROGRAPH APII, manufactured by Toyo Seiki Seisaku-sho, Ltd.) at a tensile rate of 300 mm/min to measure the maximum strength as adhesion strength.

### (Elution Test)

From a laminate film obtained by the below-described procedures, a packaging bag of 130 mm x 170 mm was prepared and, as a content, 200 ml of water was enclosed in the packaging bag. The packaging bag was then subjected to a hot water-stationary retort sterilization treatment at 120°C for 30 minutes. After the sterilization treatment, the packaging bag was cooled to room temperature and its content, water, was mixed with chloroform to be extracted into chloroform, followed by concentration. Thereafter, using a gas chromatograph-mass spectrometer, low-molecular weight substances, such as the blended additives and their oxides and decomposed matters, were quantified to determine the eluted amount of each blended additives. The ratio of the eluted amount of each additive with respect to the blended amount was calculated to determine the ratio of elution.

### (Heat-seal Strength)

From a laminate film obtained by the below-described method, two test pieces of 40 mm in width and 100 mm in length were prepared and laminated such that the tip of one of the test pieces in the longitudinal direction overlaps with the tip of the other test piece in the longitudinal direction by 15 mm. Then, the thus laminated test pieces were heat-sealed at 200°C and 1 kg/cm² for 1 second. Using a tensile tester, the thus heat-sealed test pieces were detached in the 180-degree direction at a tensile rate of 300 mm/min to measure the tensile strength as heat-seal strength.

### [Examples 1-1 to 1-3 and Comparative Examples 1-1 to 1-9]

### (Preparation of Solid Catalyst)

After preparing a homogeneous solution by allowing 4.76 g (50 mmol) of anhydrous magnesium chloride, 25 ml of decane and 23.4 ml (150 mmol) of 2-ethylhexyl alcohol to react with heating at 130°C for 2 hours, 1.11 g (7.5 mmol) of phthalic anhydride was added to the thus obtained homogeneous solution and the resulting mixture was further allowed to react with stirring at 130°C for 1 hour, thereby dissolving phthalic anhydride in the homogeneous solution. The resulting homogeneous solution was cooled to room temperature and the entire amount thereof was then dropwisely charged to 200 ml (1.8 mol) of titanium tetrachloride, which had been kept at -20°C, over a period of 1 hour. Thereafter, the resultant was heated to 110°C over a period of 4 hours and once the temperature reached 110°C, 2.68 ml (12.5 mmol) of diisobutyl phthalate was added and the resulting mixture was allowed to react for 2 hours with stirring while maintaining the temperature at 110°C. After completion of the reaction, the resulting solids were recovered by hot filtration and suspended in 200 ml of titanium tetrachloride, and the suspension was allowed to react with heating at 110°C for 2 hours. Thereafter, the resulting solids were recovered again by hot filtration and thoroughly washed with 110°C decane and hexane until no free titanium compound was detected in the washings, thereby obtaining a solid Ti catalyst component.

The solid Ti catalyst component obtained by the above-described method was stored in the form of a heptane slurry with an addition of heptane to a concentration of 5 mg/mL. When a portion of the heptane slurry was recovered and dried and the catalyst composition was analyzed, the solid Ti catalyst component was determined to have the following composition: 2.9% by mass of titanium, 56.0% by mass of chlorine, 17.0% by mass of magnesium and 20.9% by mass of isobutyl phthalate.

### (Preparation of Phenoxide Solution)

In a flask whose atmosphere had been replaced with nitrogen, 10 mL of dry heptane, 54 mg of triethylaluminum and 161 mg of the respective phenolic antioxidant shown in Tables 1 to 3 were mixed with stirring to mask the phenolic antioxidant, thereby preparing a phenoxide solution having a phenolic antioxidant concentration of 16 mg/mL.

### (Preparation of Phosphite Solution)

In a flask whose atmosphere had been replaced with nitrogen, 144 mg of the respective phosphorus-based antioxidant shown in Tables 1 to 3 and 6 mL of heptane were added and mixed with stirring to prepare a phosphite solution having a phosphorus-based antioxidant concentration of 24 mg/mL.

### (Addition, Polymerization)

To a 1,000-ml autoclave whose atmosphere had been replaced with nitrogen, 600 ml of dry heptane, 0.41 g (3.6 mmol) of triethylaluminum and, in those Examples and Comparative Examples for which the addition method is indicated as "at the time of polymerization" in Tables 1 to 3, the thus obtained phenoxide solution and phosphite solution were added in such a manner to attain the respective formulations of stabilizer composition shown in Tables 1 to 3. Then, 82.23 mg (0.36 mmol) of dicyclopentadimethoxysilane and the heptane slurry of the solid Ti catalyst component (0.012 mmol in terms of Ti) were sequentially added. Further, 11.2 g of 1-hexene was added and the atmosphere inside the autoclave was replaced with ethylene so as to pressurize the system with ethylene at 1 kgf/cm²G, thereby performing pre-polymerization (600 rpm) at 50°C for 5 minutes. Thereafter, ethylene was purged and then, hydrogen, ethylene and, as an ethylene mixture, 1-hexene were introduced to the autoclave such that the hydrogen partial pressure and the ethylene partial pressure became 2 kgf/cm²G and 7 kgf/cm²G, respectively and the amount of 1-hexene became 7 wt%. After raising the temperature of the autoclave to 80°C, the atmosphere inside the autoclave was pressurized with propylene at 5 kgf/ cm²G to perform polymerization reaction at 80°C for 2 hours. After replacing the atmosphere inside the system with nitrogen gas and quenching the polymerization reaction by adding 5 mL of ethanol at 40°C, the solvent was removed under reduced pressure at 50°C and the resulting polymer was dried in vacuum at 40°C for 5 hours to obtain a polyethylene powder.

### (Melt-kneading, Film Molding)

To 100 parts by mass of the thus obtained powder, in those Examples and Comparative Examples for which the addition method is indicated as "at the time of granulation" in Tables 1 to 3, the stabilizer composition(s) shown in Tables 1 to 3 and 0.05 parts by mass of calcium stearate were added and mixed. Then, the resulting mixture was extruded from a T-die at an extrusion temperature of 250°C to mold a film sheet of 60 µm in thickness and 300 mm in width. Thereafter, onto a supporting substrate (ester film, manufactured by TOYOBO Co., Ltd.; trade name: TOYOBO ESTER FILM E5100), an anchor coating agent (manufactured by TOYO INK Co., Ltd.; trade name: ORIBAIN TX1439) was coated in the amount shown in Table 1 and the coated surface and the above-described film sheet were press-adhered using a mat roll to produce a laminate film.

**[Table 1]**

| | Outer member | Amount of applied anchor coating agent [g/m²] | Stabilizer | Added amount [parts by mass] | Method of addition | Adhesion | Ratio of elution |
|---|---|---|---|---|---|---|---|
| Example 1-1 | E-5100 | 0.10 | AO-1¹⁾ | 0.0150 | at the time of polymerization⁴⁾ | good | 0.3 |
| Example 1-2 | E-5100 | 0.10 | AO-1¹⁾ | 0.0030 | at the time of polymerization⁴⁾ | good | 0.2 |
| | | | P-1³⁾ | 0.0060 | | | |
| Example 1-3 | E-5100 | 0.10 | AO-1¹⁾ | 0.0030 | at the time of polymerization⁴⁾ | good | 0.4 |
| | | | P-1³⁾ | 0.030 | at the time of granulation⁵⁾ | | |
| Comparative Example 1-1 | E-5100 | 0.10 | AO-1¹⁾ | 0.0150 | at the time of granulation⁵⁾ | film could not be molded | |
| Comparative Example 1-2 | E-5100 | 0.10 | AO-2²⁾ | 0.0030 | at the time of polymerization⁴⁾ | film could not be molded | |
| | | | P-1³⁾ | 0.0060 | at the time of granulation⁵⁾ | | |
| Comparative Example 1-3 | E-5100 | 0.10 | AO-1¹⁾ | 0.0030 | at the time of granulation⁵⁾ | film could not be molded | |
| | | | P-1³⁾ | 0.0060 | at the time of polymerization⁴⁾ | | |
| Comparative Example 1-4 | E-5100 | 0.10 | AO-2²⁾ | 0.030 | at the time of polymerization⁴⁾ | film could not be molded | |
| | | | P-1³⁾ | 0.030 | | | |
| Comparative Example 1-5 | E-5100 | 0.10 | AO-1¹⁾ | 0.0030 | at the time of granulation⁵⁾ | film could not be molded | |
| | | | P-1³⁾ | 0.0060 | | | |
| Comparative Example 1-6 | E-5100 | 0.15 | AO-1¹⁾ | 0.030 | at the time of granulation⁵⁾ | good | 1.0 |
| | | | P-1³⁾ | 0.030 | | | |
| Comparative Example 1-7 | E-5100 | 0.10 | AO-1¹⁾ | 0.030 | at the time of granulation⁵⁾ | could not be press-adhered | - |
| | | | P-1³⁾ | 0.030 | | | |
| Comparative Example 1-8 | E-5100 | 0.15 | AO-2²⁾ | 0.030 | at the time of granulation⁵⁾ | good | 1.0 |
| | | | P-1³⁾ | 0.030 | | | |
| Comparative Example 1-9 | E-5100 | 0.10 | AO-2²⁾ | 0.030 | at the time of granulation⁵⁾ | could not be press-adhered | - |
| | | | P-1¹⁾ | 0.030 | | | |

| | | | | | | | |
|---|---|---|---|---|---|---|---|
| ¹⁾AO-1: 3-(3,5-di-tert-butyl-4-hydroxyphenyl)-N-octadecyl propionamide ²⁾ AO-2: n-octadecyl-3-(3',5'-di-t-butyl-4'-hydroxyphenyl)propionate ³⁾ P-1: tris(2,4-t-butylphenyl)phosphite ⁴⁾ at the time of polymerization: the stabilizer was added at the time of polymerizing the monomer having an ethylenically unsaturated bond. ⁵⁾ at the time of granulation: after the polymerization of the monomer having an ethylenically unsaturated bond, the stabilizer was added and mixed and the resulting mixture was granulated by kneading at 250°C. | | | | | | | |

According to the results of Comparative Examples 1-1 to 1-9, when a production method different from that of the present invention was employed, the torque increased with time during the extrusion of the polyethylene powder from the T-die, so that a film sheet could not be produced in a stable manner.

According to the results of Comparative Examples 1-6 and 1-8, although the adhesion with the supporting substrate was improved by increasing the amount of the anchor coating agent to 0.15 g/m², there was a hygienic problem with the ratio of elution being high. In addition, the laminate films were observed to have coloration and fish-eyes.

In Comparative Examples 1-7 and 1-9, although a film sheet was obtained, since detachment of the film sheet occurred even when it was press-adhered with the supporting substrate (ester film), a laminate film could not be produced.

In contrast, from the results of Examples 1-1 to 1-3, it was confirmed that the polyethylene films produced by the production method of the present invention had good adhesion with the supporting substrate (ester film) and the ratio of elution was reduced.

### [Examples 2-1 to 2-3 and Comparative Examples 2-1 to 2-9]

A laminate film was produced in the same manner as in the above-described Example 1-1, except that the extrusion temperature by T-die was changed as shown in Table 2, that the supporting substrate was changed to an ester film (manufactured by TOYOBO Co., Ltd.; trade name: TOYOBO ESTER FILM T4100), that the anchor coating agent was not used, and that an air having an ozone concentration of 12.9 g/m³ was blown against a surface of the film sheet extruded from the T-die, which surface was press-adhered to the supporting substrate, in an amount of 3 Nm³ per hour.

**[Table 2]**

| | Outer member | Stabilizer | Added amount [parts by mass] | Method of addition | Extrusion temperature [°C] | Adhesion strength [g/15mm] | Heat-seal strength [kg/15mm] | Ratio of elution |
|---|---|---|---|---|---|---|---|---|
| Example 2-1 | T-4100 | AO-1¹⁾ | 0.0150 | at.the time of polymerization⁴⁾ | 280 | 168 | 1.86 | 0.3 |
| Example 2-2 | T-4100 | AO-1¹⁾ | 0.0030 | at the time of polymerization⁴⁾ | 280 | 171 | 2.12 | 0.2 |
| | | P-1¹⁾ | 0.0060 | | | | | |
| Example 2-3 | T-4100 | AO-1¹⁾ | 0.0030 | at the time of polymerization⁴⁾ | 280 | 165 | 1.76 | 0.4 |
| | | P-1¹⁾ | 0.030 | at the time of granulation⁵⁾ | | | | |
| Comparative Example 2-1 | T-4100 | AO-1¹⁾ | 0.0150 | at the time of granulation⁵⁾ | 280 | -⁶⁾ | film could not be molded | |
| Comparative Example 2-2 | T-4100 | AO-2²⁾ | 0.0030 | at the time of polymerization⁴⁾ | 280 | -⁶⁾ | film could not be molded | |
| | | P-1³⁾ | 0.0060 | at the time of granulation⁵⁾ | | | | |
| Comparative Example 2-3 | T-4100 | AO-1¹⁾ | 0.0030 | at the time of granulation⁵⁾ | 280 | -⁶⁾ | film could not be molded | |
| | | P-1³⁾ | 0.0060 | at the time of polymerization⁴⁾ | | | | |
| Comparative Example 2-4 | T-4100 | AO-2²⁾ | 0.030 | at the time of polymerization⁴⁾ | 280 | -⁶⁾ | film could not be molded | |
| | | P-1³⁾ | 0.030 | | | | | |
| Comparative Example 2-5 | T-4100 | AO-1¹⁾ | 0.0030 | at the time of granulation⁵⁾ | 280 | -⁶⁾ | film could not be molded | |
| | | P-1³⁾ | 0.0060 | | | | | |
| Comparative Example 2-6 | T-4100 | AO-1¹⁾ | 0.030 | at the time of granulation⁵⁾ | 280 | 83 | 1.32 | 1.0 |
| | | P-1³⁾ | 0.030 | | | | | |
| Comparative Example 2-7 | T-4100 | AO-1¹⁾ | 0.030 | at the time of granulation⁵⁾ | 300 | 163 | 2.21 | 1.0 |
| | | P-1³⁾ | 0.030 | | | | | |
| Comparative Example 2-8 | T-4100 | AO-2²⁾ | 0.030 | at the time of granulation⁵⁾ | 280 | 80 | 1.21 | 1.0 |
| | | P-1³⁾ | 0.030 | | | | | |
| Comparative Example 2-9 | T-4100 | AO-2²⁾ | 0.030 | at the time of granulation⁵⁾ | 300 | 160 | 2.02 | 1.0 |
| | | P-1³⁾ | 0.030 | | | | | |

| | | | | | | | | |
|---|---|---|---|---|---|---|---|---|
| ⁶⁾ A film could not be molded, so that the adhesion strength was not evaluated. | | | | | | | | |

According to the results of the above-described Comparative Examples 2-1 to 2-5, when a production method different from that of the present invention was employed, the torque increased with time during the extrusion of the polyethylene powder from the T-die, so that a film sheet could not be produced in a stable manner. Further, from the results of Comparative Examples 2-6 to 2-9, it was confirmed that, although a film sheet could be produced by increasing the amount of the stabilizer composition added in the addition step, the adhesion was defective and the ratio of elution was high, so that there was a hygienic problem. Moreover, from the results of Comparative Examples 2-7 and 2-9, it was confirmed that, although the adhesion was improved by increasing the extrusion temperature to 300°C, there was a hygienic problem with the ratio of elution being high.

In contrast, from the results of Examples 2-1 to 2-3, it was confirmed that the polyethylene films produced by the production method of the present invention had good adhesion with the supporting substrate (ester film) and the ratio of elution was reduced.

### [Examples 3-1 to 3-3 and Comparative Examples 3-1 to 3-9]

A laminate film was produced in the same manner as in the above-described Example 1-1 (production of laminate film), except that the anchor coating agent was changed to an adhesive for dry lamination (manufactured by Takeda Pharmaceutical Company Limited trade name: A-515/A-50) and that the extrusion temperature by the T-die was changed from 250°C to 280°C.

**[Table 3]**

| | Outer member | Amount of applied adhesive [g/m²] | Stabilizer | Added amount [parts by mass] | Method of addition | Adhesion | Ratio of eluted additive amount |
|---|---|---|---|---|---|---|---|
| Example 3-1 | E-5100 | 1.2 | AO-1¹⁾ | 0.0150 | at the time of polymerization⁴⁾ | good | 0.6 |
| Example 3-2 | E-5100 | 1.2 | AO-1¹⁾ | 0.0030 | at the time of polymerization⁴⁾ | good | 0.4 |
| | | | P-1³⁾ | 0.0060 | | | |
| Example 3-3 | E-5100 | 1.2 | AO-1¹⁾ | 0.0030 | at the time of polymerization⁴⁾ | good | 0.7 |
| | | | P-1³⁾ | 0.030 | at the time of granulation⁵⁾ | | |
| Comparative Example 3-1 | E-5100 | 1.2 | AO-1¹⁾ | 0.0150 | at the time of granulation⁵⁾ | film could not be molded | |
| Comparative Example 3-2 | E-5100 | 1.2 | AO-2²⁾ | 0.0030 | at the time of polymerization⁴⁾ | film could not be molded | |
| | | | P-1³⁾ | 0.0060 | at the time of granulation⁵⁾ | | |
| Comparative Example 3-3 | E-5100 | 1.2 | AO-1¹⁾ | 0.0030 | at the time of granulation⁵⁾ | film could not be molded | |
| | | | P-1³⁾ | 0.0060 | at the time of polymerization⁴⁾ | | |
| Comparative Example 3-4 | E-5100 | 1.2 | AO-2²⁾ | 0.030 | at the time of polymerization⁴⁾ | film could not be molded | |
| | | | P-1³⁾ | 0.030 | | | |
| Comparative Example 3-5 | E-5100 | 1.2 | AO-1¹⁾ | 0.0030 | at the time of granulation⁵⁾ | film could not be molded | |
| | | | P-1³⁾ | 0.0060 | | | |
| Comparative Example 3-6 | E-5100 | 2.0 | AO-1¹⁾ | 0.030 | at the time of granulation⁵⁾ | good | 1.0 |
| | | | P-1³⁾ | 0.030 | | | |
| Comparative Example 3-7 | E-5100 | 1.2 | AO-1¹⁾ | 0.030 | at the time of granulation⁵⁾ | could not be press-adhered | |
| | | | P-1³⁾ | 0.030 | | | |
| Comparative Example 3-8 | E-5100 | 2.0 | AO-2²⁾ | 0.030 | at the time of granulation⁵⁾ | good | 1.0 |
| | | | P-1³⁾ | 0.030 | | | |
| Comparative Example 3-9 | E-5100 | 1.2 | AO-2²⁾ | 0.030 | at the time of granulation⁵⁾ | could not be press-adhered | |
| | | | P-1³⁾ | 0.030 | | | |

According to the results of the above-described Comparative Examples 3-1 to 3-5, when a production method different from that of the present invention was employed, the torque increased with time during the extrusion of the polyethylene powder from the T-die, so that a film sheet could not be produced in a stable manner. Further, from the results of Comparative Examples 3-7 and 3-9, it was confirmed that, although a film sheet could be produced by increasing the amount of the stabilizer composition added in the addition step, the adhesion was poor and the ratio of elution was high, so that there was a hygienic problem. Moreover, from the results of Comparative Examples 3-6 and 3-8, it was confirmed that, although the adhesion was improved by increasing the amount of the applied adhesive from 1.2 g/m² to 2.0 g/m², there was a hygienic problem with the ratio of elution being high.

In contrast, from the results of Examples 3-1 to 3-3, it was confirmed that the polyethylene films produced by the production method of the present invention had good adhesion with the supporting substrate (ester film) and the ratio of elution was reduced.

Based on the above, as a packaging material, particularly as a packaging bag; the laminate film according to the present invention has excellent resistance to its content, particularly a liquid matter; therefore, the laminate film according to the present invention can be suitably used as a safer and more hygienic packaging material for food articles, pharmaceutical products.

## Claims

1. A method of producing a laminate film of a polymer, which is **characterized by** comprising the step of adding, before or during polymerization of a monomer having an ethylenically unsaturated bond, a phenolic antioxidant represented by the following Formula (1), that is masked with an organoaluminum compound, to at least one of a catalyst system, a polymerization system and a piping, such that said phenolic antioxidant is incorporated in an amount of 0.001 to 0.5 parts by mass with respect to 100 parts by mass of a polymer obtained by said polymerization: 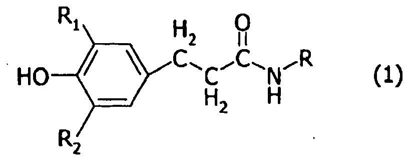 (wherein, R₁ and R₂ each independently represent a hydrogen atom, an alkyl group having 1 to 5 carbon atoms which is optionally branched or an arylalkyl group having 7 to 9 carbon atoms; and R represents an alkyl group having 1 to 30 carbon atoms which is optionally branched, an alkenyl group having 2 to 30 carbon atoms which is optionally branched, a cycloalkyl group having 3 to 12 carbon atoms which is optionally substituted or an aryl group having 6 to 18 carbon atoms which is optionally substituted),
and performing polymerization of the monomer to form said polymer and molding films from the said polymer, and laminating the films with each other or laminating the film(s) with a laminate base material.

2. The method according to claim 1, which further comprises the step of adding, before or during said polymerization of said monomer having an ethylenically unsaturated bond, a phosphorus-based antioxidant to at least one of said catalyst system, said polymerization system and said piping in an amount of 0.001 to 3 parts by mass with respect to 100 parts by mass of said polymer obtained by said polymerization.

3. The method according to claim 1, wherein said organoaluminum compound is a trialkylaluminum.

4. The method according to claims 1 to 3, further including the step of laminating said films with each other or with a laminate base material.

5. The method according to any preceding claim, wherein said monomer having an ethylenically unsaturated bond is selected from ethylene, propylene, 1-butene, 1-hexene, 3-methyl-1-butene, 3-methyl-1-pentene, 4-methyl-1-pentene, vinylcycloalkane, styrene and other α-olefins.

6. The method of claim 5, wherein said monomer is selected from ethylene or a combination of α-olefin monomers.

7. the method of claim 6, wherein said monomer is ethylene by itself, a combination of ethylene and propylene, a combination of ethylene, propylene and butene, or a combination of an α-olefin monomer and a non-conjugated diene monomer.

8. The method according to any preceding claim, wherein the phenolic antioxidant of formula I is selected from compounds 1 to 16

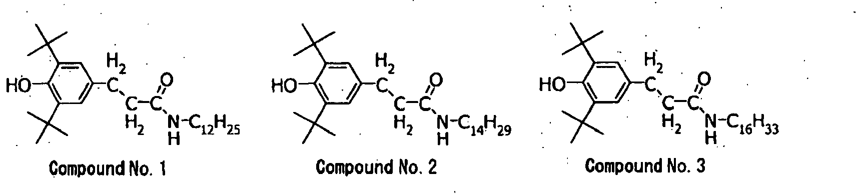

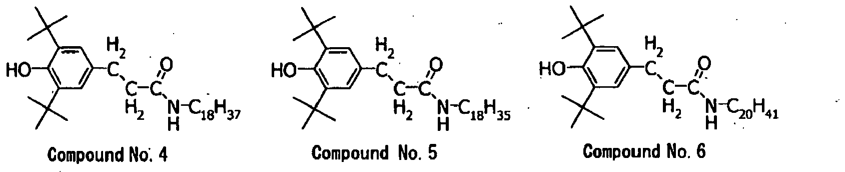

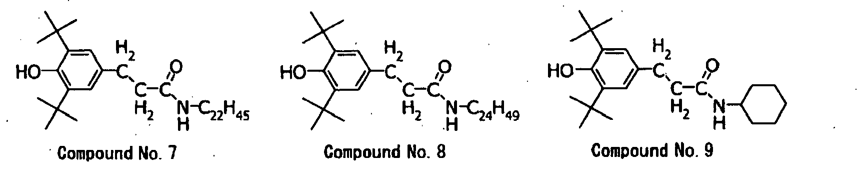

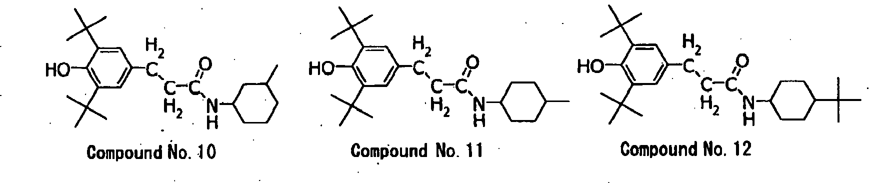

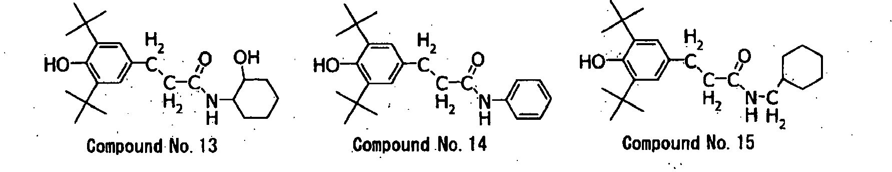

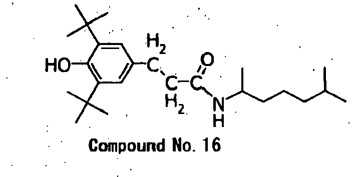

9. The method of claim 8, wherein the phenolic antioxidant is compound no. 4.

## Patentansprüche

1. Verfahren zur Herstellung einer Verbundfolie aus einem Polymer, **dadurch gekennzeichnet, dass** es den Schritt des Zufügens, vor oder während der Polymerisation eines Monomers mit einer ethylenisch ungesättigten Bindung, eines phenolischen Antioxidationsmittels, dargestellt durch die folgende Formel (1), das mit einer Organoaluminiumverbindung maskiert ist, zu mindestens einem von einem Katalysatorsystem, einem Polymerisationssystem und einer Rohrleitung dergestalt, dass das phenolische Antioxidationsmittel in einer Menge von 0,001 bis 0,5 Masseteilen bezogen auf 100 Masseteile eines durch die Polymerisation erhaltenen Polymers inkorporiert wird: 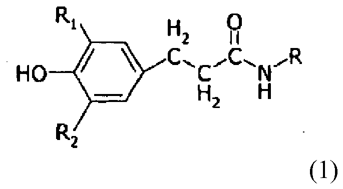 (wobei R₁ und R₂ jeweils unabhängig ein Wasserstoffatom, eine Alkylgruppe mit 1 bis 5 Kohlenstoffatomen, die gegebenenfalls verzweigt ist, oder eine Arylalkylgruppe mit 7 bis 9 Kohlenstoffatomen darstellen; und R eine Alkylgruppe mit 1 bis 30 Kohlenstoffatomen, die gegebenenfalls verzweigt ist, eine Alkenylgruppe mit 2 bis 30 Kohlenstoffatomen, die gegebenenfalls verzweigt ist, eine Cycloalkylgruppe mit 3 bis 12 Kohlenstoffatomen, die gegebenenfalls substituiert ist, oder eine Arylgruppe mit 6 bis 18 Kohlenstoffatomen, die gegebenenfalls substituiert ist, darstellt),
und Durchführung der Polymerisation des Monomers zur Bildung des Polymers und Formen von Folien aus dem Polymer, und Laminieren der Folien miteinander oder Laminieren der Folie(n) mit einem Basismaterial für Laminate.

2. Verfahren nach Anspruch 1, das weiter den Schritt des Zufügens, vor oder während der Polymerisation des Monomers mit einer ethylenisch ungesättigten Bindung, eines auf Phosphor basierenden Antioxidationsmittels zu mindestens einem von dem Katalysatorsystem, dem Polymerisationssystem und der Rohrleitung in einer Menge von 0,001 bis 3 Masseteilen bezogen auf 100 Masseteile des durch die Polymerisation erhaltenen Polymers.

3. Verfahren nach Anspruch 1, wobei die Organoaluminiumverbindung ein Trialkylaluminium ist.

4. Verfahren nach den Ansprüchen 1 bis 3, das ferner den Schritt des Laminierens der Folien miteinander oder mit einem Basismaterial für Laminate einschließt.

5. Verfahren nach einem der vorangehenden Ansprüche, wobei das Monomer mit einer ethylenisch ungesättigten Bindung ausgewählt ist aus Ethylen, Propylen, 1-Buten, 1-Hexen, 3-Methyl-1-buten, 3-Methyl-1-penten, 4-Methyl-1-penten, Vinylcycloalkan, Styren und anderen α-Olefinen.

6. Verfahren nach Anspruch 5, wobei das Monomer ausgewählt ist aus Ethylen oder einer Kombination von α-Olefinmonomeren.

7. Verfahren nach Anspruch 6, wobei das Monomer Ethylen allein, eine Kombination von Ethylen und Propylen, eine Kombination von Ethylen, Propylen und Buten oder eine Kombination von einem α-Olefinmonomer und einem nicht konjugierten Dienmonomer ist.

8. Verfahren nach einem der vorangehenden Ansprüche, wobei das phenolische Antioxidans der Formel 1 aus den Verbindungen 1 bis 16 ausgewählt ist.

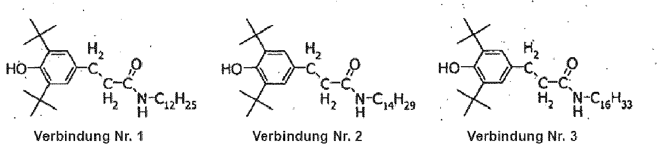

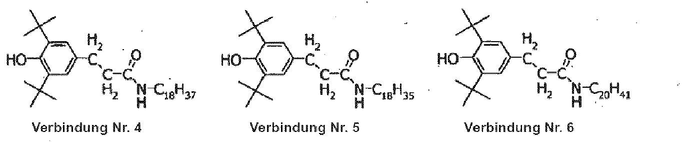

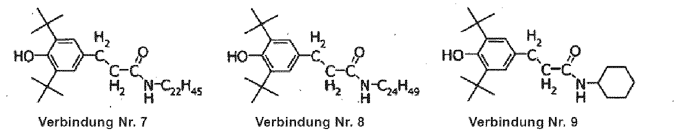

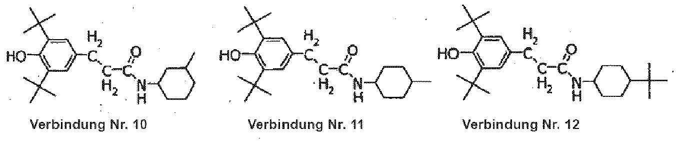

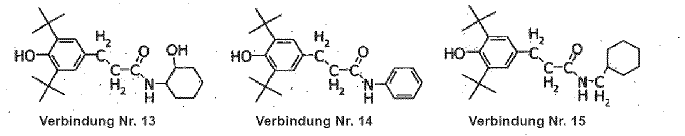

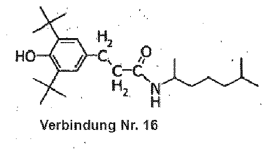

9. Verfahren nach Anspruch 8, wobei das phenolische Antioxidationsmittel die Verbindung Nr. 4 ist.

## Revendications

1. Procédé de fabrication d'un film stratifié d'un polymère, qui est **caractérisé en ce qu'**il comprend l'étape d'ajout, avant ou au cours de la polymérisation, d'un monomère possédant une liaison éthyléniquement insaturée, d'un antioxydant phénolique représenté par la Formule (I) suivante, qui est masqué par un composé organoaluminium, à au moins d'un système catalyseur, d'un système de polymérisation et d'une conduite, de sorte que ledit antioxydant phénolique est incorporé en une quantité de 0,001 à 0,5 parties en masse par rapport à 100 parties en masse d'un polymère obtenu par ladite polymérisation : 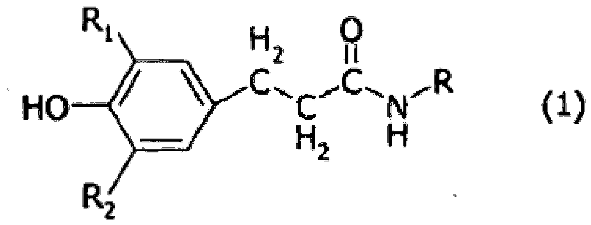 (dans laquelle formule R₁ et R₂ représentent chacun indépendamment un atome d'hydrogène, un groupe alkyle portant 1 à 5 atomes de carbone qui est facultativement ramifié ou un groupe arylalkyle portant 7 à 9 atomes de carbone ; et R représente un groupe alkyle portant 1 à 30 atomes de carbone qui est facultativement ramifié, un groupe alkényle portant 2 à 30 atomes de carbone qui est facultativement ramifié, un groupe cycloalkyle portant 3 à 12 atomes de carbone qui est facultativement substitué ou un groupe aryle portant 6 à 18 atomes de carbone qui est facultativement substitué),
et de réalisation de la polymérisation du monomère pour former ledit polymère et de moulage des films à partir dudit polymère et de stratification des films l'un avec l'autre ou de strarification du/des film(s) avec un matériau de base stratifié.

2. Procédé selon la revendication 1, qui comprend en outre l'étape d'ajout, avant ou au cours de la polymérisation, dudit monomère ayant une liaison éthyléniquement insaturée, d'un antioxydant à base de phosphore à au moins un dudit système de catalyseur, dudit système de polymérisation et de ladite conduite en une quantité de 0,001 à 3 parties en masse par rapport à 100 parties en masse dudit polymère obtenu par ladite polymérisation.

3. Procédé selon la revendication 1, dans lequel ledit composé organoaluminium est un trialkylaluminium.

4. Procédé selon les revendications 1 à 3, comprenant en outre l'étape de stratification desdits films l'un avec l'autre ou avec le matériau de base stratifié.

5. Procédé selon l'une quelconque des revendications précédentes, dans lequel ledit monomère possédant une liaison éthyléniquement insaturée est sélectionné parmi éthylène, propylène, 1-butène, 1-hexène, 3-méthyl-1-butène, 3-méthyl-1-pentène, 4-méthyl-1-pentène, vinylcycloalkane, styrène et d'autres α-oléfines.

6. Procédé selon la revendication 5, dans lequel ledit monomère est sélectionné parmi l'éthylène ou une combinaison de monomères d'α-oléfines.

7. Procédé selon la revendication 6, dans lequel ledit monomère est l'éthylène à lui seul, une combinaison d'éthylène et de propylène, une combinaison d'éthylène, de propylène et de butène, ou une combinaison d'un monomère d'α-oléfine et d'un monomère de diène non conjugué.

8. Procédé selon l'une quelconque des revendications précédentes, dans lequel l'antioxydant phénolique de la formule I est sélectionné parmi les composés 1 à 16.

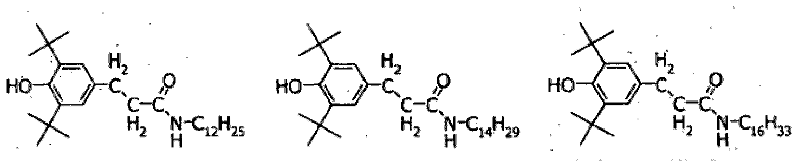

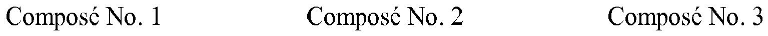

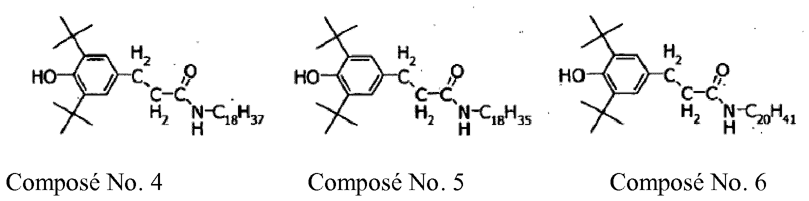

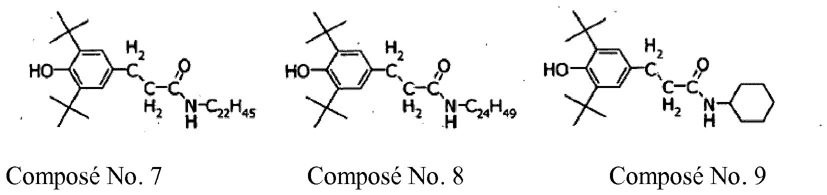

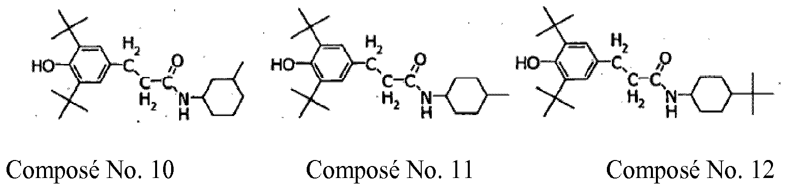

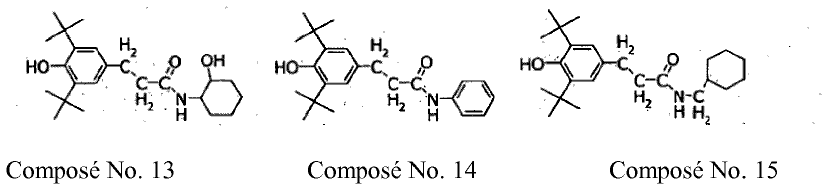

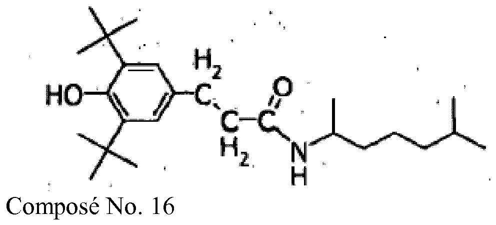

9. Procédé selon la revendication 8, dans lequel l'antioxydant phénolique est le composé no. 4.
